# EUROPÄISCHE PATENTSCHRIFT

(11) **EP 3 530 343 B1**
(45) Veröffentlichungstag und Bekanntmachung des Hinweises auf die Patenterteilung: **06.10.2021**
(21) Anmeldenummer: 18157857.6
(22) Anmeldetag: 21.02.2018
(51) Int. Cl.: B01D 67/00, B01D 69/06, B01D 69/10, B01D 69/12, B01D 71/02

(54) **VERFAHREN ZUR HERSTELLUNG EINER KERAMISCHEN FILTERVORRICHTUNG**
METHOD FOR PRODUCING A CERAMIC FILTER DEVICE
PROCÉDÉ DE FABRICATION D'UN DISPOSITIF FILTRANT CÉRAMIQUE

(43) Veröffentlichungstag der Anmeldung: 28.08.2019
(73) Patentinhaber: KERAFOL Holding GmbH, 92676 Eschenbach (DE)
(72) Erfinder: Koppe Franz, 92676 Eschenbach (DE)
(74) Vertreter: Hafner & Kohl PartmbB

(56) Entgegenhaltungen:
- EP-A1- 2 818 230
- DE-A1- 4 330 163
- DE-A1-102011 107 278
- US-A- 5 730 869

## Beschreibung

Die Erfindung betrifft ein Verfahren zur Herstellung einer Filtervorrichtung, eine zur Durchführung dieses Verfahrens geeignete Fertigungsvorrichtung sowie eine Filtervorrichtung.

Aus dem Stand der Technik sind verschiedene Filtervorrichtungen bekannt, die bisweilen auch als Plattenfilter bezeichnet werden.

Die US 5,730,869 A beschreibt z. B. einen Keramikfilter, für dessen Herstellung zwei gesinterte Keramikaußenlagen über keramische Stege und einen keramischen Außenring durch Versinterung zu einer homogenen Einheit miteinander verbunden werden. Der so hergestellte Filter eignet sich für spezielle Anwendungsbereiche, primär für den Bereich der Mikro- und Ultrafiltration, insbesondere auch für Anwendungen in organischen Lösungsmitteln und heißen, aggressiven Prozessmedien. Der Herstellungsvorgang ist relativ aufwändig und damit auch teuer.

Die DE 10 2011 107 278 A1 beschreibt einen Keramikfilter, bei welchem angesinterte Distanzelemente aus mehreren Teilelementen bestehen, die einen sich im Wesentlichen linear in Richtung der Abflussöffnung erstreckenden Abschnitt umfassen, von dem aus mehrere zueinander parallel angeordneter Abschnitte abzweigen. Auch ein derartiger Filter ist in seiner Herstellung relativ kompliziert und kostenaufwendig, so dass er für weniger komplexe Anwendungsbereiche aus Kostengründen nicht mehr wirtschaftlich einsetzbar ist.

Die DE 101 22 095 A1 beschreibt ein Membranelement mit einer Permeatablauföffnung. Dieses umfasst ein Trägerelement und eine auf beiden Seiten des Trägerelementes aufgebrachte Membran, die jeweils ebenfalls die Permeatablauföffnung enthalten. Die Oberfläche der Seiten des Trägerelements weist Strukturen auf, die der Zuführung des Permeats zur Permeatablauföffnung dienen und die als Membran verwendete Membranfolie stützen. Der äußere Rand des Trägerelements ist mit den Membranfolien verbunden.

EP 2 818 230 A1 offenbart eine polymerbasierte Filtereinrichtung.

Der vorgenannte Stand der Technik ist insofern verbesserungswürdig, als die Filtervorrichtungen nur aufwändig und damit teuer herstellbar sind.

Der Erfindung liegt daher die Aufgabe zugrunde, ein Verfahren aufzuzeigen, um möglichst günstig eine entsprechende Filtervorrichtung herzustellen, die aufgrund der günstigen Herstellung auch für die Anwendung in weniger aufwändigen Filteraufgaben geeignet ist.

Diese Aufgabe wird durch ein Verfahren zur Herstellung einer keramischen Filtervorrichtung gemäß Anspruch 1 gelöst. Vorteilhafte Weiterbildungen ergeben sich aus den Unteransprüchen.

Als Kern der Erfindung wird es angesehen, ein Verfahren vorzuschlagen mit Hilfe dessen eine keramische Filtervorrichtung fertigbar ist, die wenigstens zwei Außenlagen und eine dazwischen angeordnete und diese verbindende Zwischenlage umfasst, wobei zunächst eine erste Außenlage bereitgestellt wird, dann auf dieser eine Zwischenlage aufgebracht wird und anschließend wiederum auf der Zwischenlage eine zweite Außenlage aufgebracht wird. Erfindungswesentlich ist dabei, dass das Aufbringen der Zwischenlage dergestalt von statten geht, dass ein viskoses keramisches Material aufgetragen wird, wobei Teilbereiche der ersten Außenlage unbedeckt bleiben. Anders ausgedrückt: auf Teilbereichen der ersten Außenlage wird viskoses keramisches Material aufgetragen, auf anderen Teilbereichen der ersten Außenlage wird kein viskoses keramisches Material aufgetragen.

Bei der Filtervorrichtung handelt es sich um eine keramische Filtervorrichtung; bei den Außenlagen handelt es sich demnach typischerweise um keramische Außenlagen, bei der Zwischenlage handelt es sich demnach typischerweise um eine keramische Zwischenlage.

Als erster Schritt einer Fertigung der Filtervorrichtung können also zunächst zwei Außenlagen hergestellt werden - beispielsweise durch einen Stanzvorgang einer (keramischen) Grünfolie. Entsprechende, gegebenenfalls z. B. durch einen Stanzvorgang vorkonfektionierte Außenlagen können alternativ auch vorkonfektioniert bereitgestellt werden; die Herstellung der Außenlagen kann demnach auch in einem zu dem hier beschriebenen Verfahren gesonderten Herstellungsprozess erfolgen.

Der Auftrag des keramischen Materials kann bahnförmig durchgehend oder unterbrochen, oder punktuell geschehen. Die Formgebung des Auftrags wird an die Anwendung des Filters angepasst, wohingegen das Fertigungsprinzip immer gleich bleibt. Dabei bildet der Materialauftrag des viskosen keramischen Materials eines oder mehrere Trennelemente aus, deren Form durch das aufgetragene viskose keramische Material bestimmbar oder bestimmt ist bzw. sind.

In einem weiteren erfindungsgemäßen Verfahrensschritt wird die zweite Außenlage beim Aufbringen auf die Zwischenlage auf einen definierten Abstand zur ersten Außenlage gebracht. Dieser Abstand kann vorab in Abhängigkeit von den jeweiligen Endabmessungen der herzustellenden Filtervorrichtung, d. h. insbesondere von den Soll-Abmessungen der Filtervorrichtung nach einem Sintervorgang, bestimmt werden. Dies bedeutet, dass das aufgetragene viskose keramische Material zwischen den Außenlagen geringfügig gepresst oder gequetscht werden kann. Das Maß der Pressung bzw. Quetschung wird typischerweise im Hinblick auf die Soll-Abmessungen der Filtervorrichtung gewählt.

In einer bevorzugten Ausführungsvariante wird dafür die zweite Außenlage relativ zur ersten Außenlage bewegt, wobei das punkt- und/oder bahnförmig aufgebrachte viskose keramische Material eine Formänderung, insbesondere auf das Sollmaß vor einem Sintervorgang, erfährt. Das Sollmaß vor einem Sintervorgang wird wiederum typischerweise im Hinblick auf die Soll-Abmessungen der Filtervorrichtung gewählt.

Vorzugsweise erfolgt das punkt- oder bahnförmige Auftragen des viskosen keramischen Materials mittels wenigstens einer Düse, die weiterhin bevorzugt in wenigstens einem Bewegungsfreiheitsgrad relativ zu der ersten Außenlage bewegbar gelagert ist und in x-, y- und z-Richtung relativ zur ersten Außenlage positioniert werden kann. Vorzugsweise erfolgt diese Positionierung über eine Steuereinheit. In einer weiteren bevorzugten Ausführungsform wird die die erste Außenlage aufnehmende Auflage relativ zu einer Düse bewegbar gelagert. In einer weiteren bevorzugten Ausführungsform wird sowohl die Düse als auch die die erste Außenlage aufnehmende Auflage bewegbar gelagert. Eine Bewegung der baulichen Komponenten erfolgt vorzugsweise über eine Steuerung. In einer weiteren bevorzugten Ausführungsform umfasst die Fertigungsvorrichtung eine Steuerung zur Positionierung der Düse und/oder der Auflage in x-, y- und/oder z-Richtung. Die Steuerung kann mit wenigstens einem Antrieb zusammenwirken, über welchen eine die Düse und/oder die die erste Außenlage aufnehmende Auflage in eine Bewegung versetzende Antriebskraft erzeugbar ist.

Die Viskosität des aufzutragenden keramischen Materials kann in Abhängigkeit der Form des Materialauftrags unterschiedlich gewählt werden. Der Viskositätsbereich unter typischen Umgebungsbedingungen ist typischerweise pastös. Der Viskositätsbereich ist typischerweise so gewählt, dass das keramische Material nach dem Auftrag eine gewisse Formstabilität aufweist, d. h. insbesondere nicht flächig zerfließt. Der Auftrag des keramischen Materials erfolgt dabei typischerweise raupenförmig, d. h. das keramische Material wird typischerweise als formstabile raupenartige bzw. raupenförmige Bahn aufgetragen. Eine raupenartige bzw. -förmige Bahn definiert sich typischerweise durch eine zumindest abschnittsweise, insbesondere kreissegmentartig, gebogen bzw. gewölbt verlaufende Querschnittsgeometrie.

Ebenso ist es möglich, die Viskosität an die Fertigungsumgebung wie beispielsweise Temperatur oder Luftfeuchtigkeit anzupassen, da entsprechende Fertigungsräume möglicherweise jahreszeitenbedingt unterschiedliche Umgebungsbedingungen bieten, die möglicherweise kostengünstiger über den Materialauftrag als über die Sicherstellung konstanter Umgebungsluftbedingungen gewährleistet werden kann.

Vorstehend beschriebene Verfahrensschritte sind geeignet, einen mehrlagigen sinterfähigen (keramischen) Körper auszubilden. Der so ausgebildete (mindestens) dreilagige Körper kann anschließend in einem gemeinsamen Sinterprozess gesintert werden. Dafür ist es vorteilhaft, bereits die erste Außenlage auf einer Auflage zu positionieren, die nach dem Aufbau des mehrlagigen sinterfähigen Körpers in einen Sinterofen verbracht werden kann. Dementsprechend umfasst die erfindungsgemäße Fertigungsvorrichtung eine Auflage zum Auflegen der ersten Außenlage, wenigstens eine Düse zum Auftragen des viskosen keramischen Materials, einen oder mehrere Abstandshalter zum Bestimmen und Halten des Abstandes zwischen den beiden Außenlagen sowie Mittel zur Verbringung der auf der Auflage angeordneten Außenlagen und der dazwischen angeordneten Zwischenlage in einen Sinterofen.

In einer weiteren bevorzugten Ausführungsform sind die Abstandshalter bewegbar relativ zueinander gelagert, insbesondere derart, dass punkt- und/oder bahnförmig aufgebrachtes viskoses keramisches Material eine Formänderung, insbesondere auf ein Sollmaß vor einem Sintervorgang, erfährt. Dementsprechend umfasst die erfindungsgemäße Filtervorrichtung mindestens zwei Außenlagen und eine dazwischen angeordnete Zwischenlage, die aus einem oder mehreren Trennelementen besteht, die Linienform(en), Punktform oder beliebige Freiform(en) einnehmen können.

Die Außenlagen sind aus keramischem Material, d. h. z. B Aluminiumoxid (Al₂O₃), gebildet, wobei das keramische Material der Außenlagen identisch sein kann und identisch mit dem keramischen Material der Zwischenlage sein kann. Ebenso ist denkbar, dass unterschiedliche keramische Materialien verwendet werden.

Die Außenlagen sind flächenartig bzw. -förmig ausgebildet. Die Flächenform beinhaltet typischerweise eine ebene geometrische Gestalt.

Ein derartiger Filter ist aufgrund der einfachen Struktur der Filteraußenlagen und des immer gleichen Prinzips der Schichtbildung günstig herstellbar. Der beschriebene Herstellung ist schnell umsetzbar und damit preisgünstig, wobei die Formgebung (z. B. Linienführung) der Zwischenlage der jeweiligen Verwendung angepasst werden kann, so dass bei der Verwendung identischer Außenlagen die Form an spezielle Aufgabenbereiche angepasst werden kann, ohne das eigentliche Konstruktions- und Herstellungsprinzip ändern zu müssen.

Die erfindungsgemäße Filtervorrichtung kann als Einzelplattenfiltervorrichtung eingesetzt werden oder aber auch als stackartig aufgebaute Mehrplattenanordnung.

Die Erfindung ist anhand von Ausführungsbeispielen in den Zeichnungsfiguren näher erläutert. Dabei zeigen:
- Fig. 1: einen Schnitt durch eine erste Ausführungsform der erfindungsgemäßen Filtervorrichtung;
- Fig. 2: einen Ausschnitt aus dem Fertigungsprozess;
- Fig. 3: beispielhafte Formgebungen der Trennelemente der Zwischenlage; und
- Fig. 4: einen weiteren Ausschnitt aus dem Fertigungsprozess.

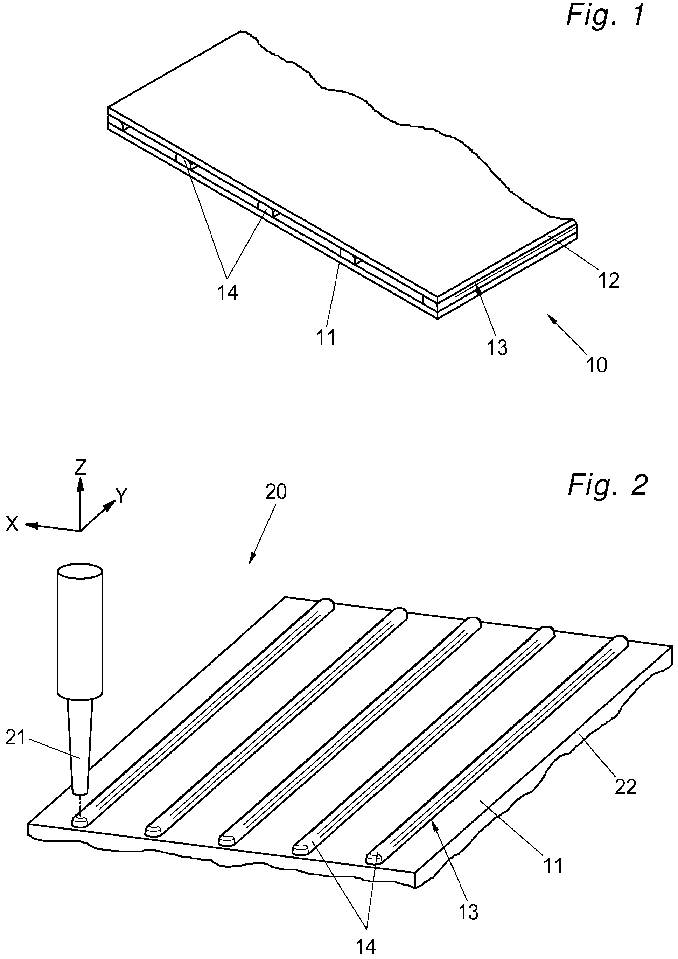

In Fig. 1 erkennt man einen Schnitt durch eine erste beispielhafte Ausführungsform einer erfindungsgemäßen Filtervorrichtung 10 mit einer ersten Außenlage 11, einer Zwischenlage 13 und einer zweiten Außenlage 12. Die Zwischenlage 13 umfasst mehrere Trennelemente 14, die angedeutet in Linienform angeordnet sind.

Fig. 2 zeigt den Verfahrensschritt, während dessen die Zwischenlage13 in Gestalt des viskosen keramischen Materials als Trennelemente 14 aufgetragen wird.

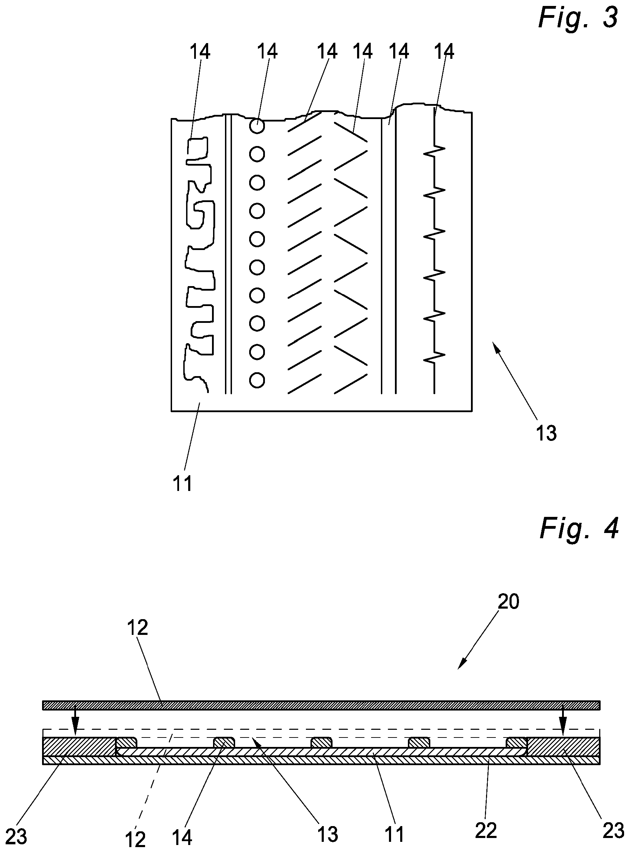

In Fig. 3 sind beispielhafte Formgebungen der Trennelemente 14 der Zwischenlage 13 zu erkennen. Im Rahmen der Ansprüche sind generell alle beliebigen geometrischen Anordnungen, Formen und Längen denkbar.

Fig. 4 zeigt einen weiteren Ausschnitt aus dem Fertigungsprozess, nämlich wie die zweite Außenlage 12 auf die Abstandshalter 23 abgesenkt wird. Dabei wird der viskose Materialauftrag leicht gepresst bzw. gequetscht, so dass schließlich (nicht dargestellt), die Trennelemente 14 die beiden Außenlagen 11, 12 stofflich kontaktieren bzw. verbinden. Die erste Außenlage 11 ruht auf der Auflage 22.

Abschließend sei nochmals angemerkt, dass die Filtervorrichtung 10 mit ihren Außenlagen 11, 12 je nach Anwendungsbereich unterschiedliche Trennelemente 14 aufweisen kann, deren Durchfluss-Innenwiederstand an die jeweiligen Aufgaben angepasst werden kann. Auch die Außenlagen 11, 12 können unterschiedliche Stärken aufweisen, ebenfalls abhängig vom Einsatzbereich der Filtervorrichtung 10. Die Filtervorrichtung 10 kann ferner an unterschiedlichsten Stellen mit Drainageöffnungen, Rückspülöffnungen, Filtratzuflüssen und - abflüssen versehen sein. Hinsichtlich der randseitigen Dichtung können Steckleisten, Verklebungen, Gummidichtungen und dgl. eingesetzt werden.

Die Filtervorrichtung 10 kann rund oder eckig ausgebildet sein und mehrlagig bzw. -schichtig zu einem Filterstack zusammengebaut sein.

## Patentansprüche

1. Verfahren zum Herstellen einer keramischen Filtervorrichtung (10), umfassend wenigstens zwei Außenlagen (11, 12), zwischen welchen eine die beiden Außenlagen (11, 12) miteinander verbindenden Zwischenlage (13) angeordnet oder ausgebildet ist, **gekennzeichnet durch** die folgenden Schritte:
- Bereitstellen einer ersten Außenlage (11),
- Aufbringen einer Zwischenlage (13) auf der ersten Außenlage (11), wobei Teilbereiche der ersten Außenlage (11) unbedeckt bleiben,
- Aufbringen einer zweiten Außenlage (12) auf der Zwischenlage (13),
wobei das Aufbringen der Zwischenlage (13) ein punkt- und/oder bahnförmiges Auftragen eines viskosen keramischen Materials umfasst, wobei die erste und die zweite Außenlage (11, 12) als flächige keramische Körper, insbesondere als keramische Platten, bereitgestellt werden,
wobei die Außenlagen (11, 12) und die dazwischen angeordnete Zwischenlage (13) in einen Ofen verbracht werden und in einem Sinterprozess behandelt werden.

2. Verfahren nach Anspruch 1, **dadurch gekennzeichnet, dass** die Zwischenlage (13) eines oder mehrere, Trennelemente (14) umfasst, deren Form durch das aufgetragene viskose keramische Material bestimmt ist oder sind.

3. Verfahren nach Anspruch 1 oder 2, **dadurch gekennzeichnet, dass** die Zwischenlage (13) eines oder mehrere, insbesondere punktförmige, Stützelemente (14) umfasst, deren Form durch das aufgetragene viskose keramische Material bestimmt ist oder sind.

4. Verfahren nach einem der Ansprüche 1 bis 3, **dadurch gekennzeichnet, dass** die zweite Außenlage (12) nach dem Aufbringen auf die Zwischenlage (13) auf einen definierten Abstand zur ersten Außenlage (11) gebracht wird.

5. Verfahren nach Ansprüche 4, **dadurch gekennzeichnet, dass** die zweite Außenlage (12) relativ zur ersten Außenlage (11) bewegt wird, wobei das punkt- und/oder bahnförmig aufgebrachte viskose keramische Material eine Formänderung, insbesondere auf ein Sollmaß vor einem Sintervorgang, erfährt.

6. Verfahren nach einem der Ansprüche 1 bis 5, **dadurch gekennzeichnet, dass** das punkt- und/oder bahnförmige Auftragen des viskosen keramischen Materials mittels wenigstens einer in wenigstens einem Bewegungsfreiheitsgrad relativ zu der ersten Außenlage (11) bewegbar gelagerten Düse (21) geschieht.

7. Verfahren nach einem der Ansprüche 1 bis 5, **dadurch gekennzeichnet, dass** die die erste Außenlage (11) aufnehmende Auflage (22) bewegbar gelagert ist.

8. Verfahren nach einem der Ansprüche 1 bis 5, **dadurch gekennzeichnet, dass** die Düse (21) und die die erste Außenlage (11) aufnehmende Auflage (22) bewegbar gelagert ist.

9. Verfahren nach einem der vorhergehenden Ansprüche, **dadurch gekennzeichnet, dass** das bahnartige Auftragen des viskosen keramischen Materials in der Form gerader Linien und/oder freigeformter Linien erfolgt.

10. Verfahren nach einem der vorhergehenden Ansprüche, **dadurch gekennzeichnet, dass** das Auftragen des viskosen keramischen Materials in punktueller Form erfolgt.

## Claims

1. A method of manufacturing a ceramic filter device (10) comprising at least two outer layers (11, 12), between which an intermediate layer (13) connecting the two outer layers (11, 12) to one another is arranged or formed, **characterized by** the following steps:
- providing a first outer layer (11),
- applying an intermediate layer (13) to the first outer layer (11), with partial areas of the first outer layer (11) remaining uncovered,
- applying a second outer layer (12) to the intermediate layer (13),
wherein the application of the intermediate layer (13) comprises a dot-shaped and/or web-shaped application of a viscous ceramic material,
wherein the first and the second outer layer (11, 12) are provided as flat ceramic bodies, in particular as ceramic plates,
wherein the outer layers (11, 12) and the intermediate layer (13) arranged therebetween are brought into a furnace and treated in a sintering process.

2. Method according to claim 1, **characterized in that** the intermediate layer (13) comprises one or more, separating elements (14), the shape of which is or are determined by the applied viscous ceramic material.

3. Method according to claim 1 or 2, **characterized in that** the intermediate layer (13) comprises one or more, in particular point-shaped, supporting elements (14), the shape of which is or are determined by the applied viscous ceramic material.

4. Method according to one of claims 1 to 3, **characterized in that** the second outer layer (12) is brought to a defined distance from the first outer layer (11) after application to the intermediate layer (13).

5. Method according to claims 4, **characterized in that** the second outer layer (12) is moved relative to the first outer layer (11), wherein the viscous ceramic material applied in dot and/or web form undergoes a change in shape, in particular to a nominal dimension before a sintering process.

6. Method according to one of claims 1 to 5, **characterized in that** the dot-like and/or web-like application of the viscous ceramic material takes place by means of at least one nozzle (21) mounted movably in at least one degree of freedom of movement relative to the first outer layer (11).

7. Method according to one of claims 1 to 5, **characterized in that** the support (22) receiving the first outer layer (11) is movably mounted.

8. Method according to one of claims 1 to 5, **characterized in that** the nozzle (21) and the support (22) receiving the first outer layer (11) are movably mounted.

9. Method according to one of the preceding claims, **characterized in that** the web-like application of the viscous ceramic material takes place in the form of straight lines and/or free-formed lines.

10. Method according to one of the preceding claims, **characterized in that** the application of the viscous ceramic material takes place in punctiform form.

## Revendications

1. Procédé de fabrication d'un dispositif de filtre céramique (10) comprenant au moins deux couches extérieures (11, 12), entre lesquelles est disposée ou formée une couche intermédiaire (13) reliant les deux couches extérieures (11, 12) l'une à l'autre, **caractérisé par** les étapes suivantes :
- Fournir une première couche extérieure (11),
- appliquer une couche intermédiaire (13) sur la première couche extérieure (11), des régions partielles de la première couche extérieure (11) restant non couvertes,
- appliquer une deuxième couche extérieure (12) sur la couche intermédiaire (13),
dans lequel l'application de la couche intermédiaire (13) comprend une application en forme de point et/ou en forme de bande d'un matériau céramique visqueux, dans lequel la première et la deuxième couche extérieure (11, 12) sont prévues comme des corps céramiques plats, en particulier comme des plaques céramiques,
dans lequel les couches extérieures (11, 12) et la couche intermédiaire (13) disposée entre elles sont amenées dans un four et traitées dans un processus de frittage.

2. Procédé selon la revendication 1, **caractérisé en ce que** la couche intermédiaire (13) comprend un ou plusieurs éléments de séparation (14), dont la forme est ou sont déterminés par le matériau céramique visqueux appliqué.

3. Procédé selon la revendication 1 ou 2, **caractérisé en ce que** la couche intermédiaire (13) comprend un ou plusieurs éléments de support (14), en particulier en forme de pointe, dont la forme est déterminée par le matériau céramique visqueux appliqué.

4. Procédé selon l'une quelconque des revendications 1 à 3, **caractérisé en ce que** la deuxième couche extérieure (12) est amenée à une distance définie de la première couche extérieure (11) après application sur la couche intermédiaire (13).

5. Procédé selon la revendication 4, **caractérisé en ce que** la deuxième couche extérieure (12) est déplacée par rapport à la première couche extérieure (11), le matériau céramique visqueux appliqué sous forme de points et/ou de bande subissant un changement de forme, en particulier à une dimension souhaitée avant un processus de frittage.

6. Procédé selon l'une quelconque des revendications 1 à 5, **caractérisé en ce que** l'application en forme de points et/ou de bandes du matériau céramique visqueux est effectuée au moyen d'au moins une buse (21) montée mobile dans au moins un degré de liberté de mouvement par rapport à la première couche extérieure (11).

7. Procédé selon l'une quelconque des revendications 1 à 5, **caractérisé en ce que** le support (22) recevant la première couche extérieure (11) est monté mobile.

8. Procédé selon l'une des revendications 1 à 5, **caractérisé en ce que** la buse (21) et le support (22) recevant la première couche extérieure (11) sont montés mobiles.

9. Procédé selon l'une quelconque des revendications précédentes, **caractérisé en ce que** l'application en bande du matériau céramique visqueux est effectuée sous la forme de lignes droites et/ou de lignes libres.

10. Procédé selon l'une des revendications précédentes, **caractérisé en ce que** l'application de la matière céramique visqueuse se fait sous forme punctiforme.
